# EUROPÄISCHE PATENTSCHRIFT

(11) **EP 1 983 292 B1**
(45) Veröffentlichungstag und Bekanntmachung des Hinweises auf die Patenterteilung: **14.06.2017**
(21) Anmeldenummer: 08007262.2
(22) Anmeldetag: 12.04.2008
(51) Int. Cl.: F41G 7/34, F41G 7/22

(54) **Verfahren zur Optimierung der bildgestützten automatischen Navigation eines unbemannten Flugkörpers**
Method for optimising the imaging assisted automatic navigation of an unmanned aircraft
Procédé d'optimisation de la navigation automatique assistée par imagerie d'un engin volant sans pilote

(30) Priorität: 18.04.2007 DE 102007018187
(43) Veröffentlichungstag der Anmeldung: 22.10.2008
(73) Patentinhaber: MBDA Deutschland GmbH, 86529 Schrobenhausen (DE)
(72) Erfinder: Grabmeier, Michael, 83022 Rosenheim (DE)
(74) Vertreter: Krebs, Jörg

(56) Entgegenhaltungen:
- CH-A5- 675 638
- DE-C1- 3 830 496
- US-A- 5 275 354
- WILLIAMS P K ED - CHEN R R: "TARGET INFRARED SIGNATURE USING AUTOMATIC MODEL BASED LASER RADAR ALIGNMENT" PROCEEDINGS OF THE ASILOMAR CONFERENCE ON SIGNALS, SYSTEMS AND COMPUTERS. PACIFIC GROVE, OCT. 30 - NOV. 1, 1989; [PROCEEDINGS OF THE ASILOMAR CONFERENCE ON SIGNALS, SYSTEMS AND COMPUTERS], NEW YORK, IEEE, US, Bd. 1 OF 02, 30. Oktober 1989 (1989-10-30), Seiten 395-398, XP000217682

## Beschreibung

### TECHNISCHES GEBIET

Die vorliegende Erfindung betrifft ein Verfahren zur Optimierung der bildgestützten automatischen Navigation eines unbemannten Flugkörpers.

Beim Planen von militärischen Missionen, die von unbemannten Flugkörpern durchgeführt werden sollen, wird anhand von Satellitenaufnahmen oder Luftaufnahmen ein topographisches Referenzmodell erstellt, das von einer Navigationseinrichtung des unbemannten Flugkörpers verwendet wird, um sich anhand von Bildern oder Bildsequenzen, die von einem Suchkopf des unbemannten Flugkörpers aufgenommen werden, zu orientieren. Dabei werden in der Regel markante topographische Strukturen, die in den Luftaufnahmen oder den Satellitenaufnahmen erkennbar sind, ausgewählt und deren topographische Daten werden in einem dreidimensionalen Geländereferenzmodell abgelegt. An diesem dreidimensionalen Geländereferenzmodell kann sich dann die Navigationseinrichtung des unbemannten Flugkörpers orientieren, indem sie Aufnahmen, die vom Suchkopf des unbemannten Flugkörpers geliefert werden, mit dem dreidimensionalen Geländereferenzmodell nach einer entsprechenden perspektivischen Transformation vergleicht. Insbesondere in der Steuerung während des Zielanflugs eines unbemannten Flugkörpers ist es erforderlich, eine möglichst genaue Orientierung des Flugkörpers zu ermöglichen, um eine Maximierung der Treffsicherheit und eine Minimierung von Kollateralschäden zu erzielen. Beispielsweise werden dazu dreidimensionale Linienmodelle von topographischen Strukturen, wie Häusern, Straßen oder Geländekonturen, die sich unmittelbar um das Ziel herum befinden aus den Satellitenaufnahmen oder Luftaufnahmen ausgewählt und dann mittels Ortho- und Geo-Referenzierung in eine möglichst genaue dreidimensionale Geländedatenbank überführt.

### STAND DER TECHNIK

Eine Zielerkennungseinrichtung, die auf der Grundlage dieses Verfahren arbeitet, ist aus der DE 38 30 496 C1 bekannt.

Bei der Erstellung eines dreidimensionalen Geländereferenzmodells kann das Problem auftreten, dass der die Satellitenaufnahme oder die Luftaufnahme abbildende Sensor in einem anderen Spektralbereich arbeitet, als der abbildende Sensor des unbemannten Flugkörpers. So arbeitet beispielsweise der die Satellitenaufnahme liefernde Sensor im Bereich des sichtbaren Lichts, während der Sensor im Flugkörper im Infrarotbereich arbeitet. Das bedeutet, dass der Satellitensensor vorrangig das von einer Geländekontur reflektierte Sonnenlicht erfasst, während der Sensor im Flugkörper die von der Geländekontur emittierte Wärmestrahlung erfasst. Dies hat zur Folge, dass eine auf der Grundlage der im sichtbaren Licht vorgenommenen Satellitenaufnahme erfolgte Auswahl einer Geländekontur für die Erstellung des dreidimensionalen Geländereferenzmodells vom Sensor des unbemannten Flugkörpers nicht oder nur schwach abgebildet wird und daher für den unbemannten Flugkörper nicht oder nur schwer zu erkennen ist. Andererseits können Geländekonturen, die der Sensor des Flugkörpers gut aus der von seinem Suchkopf gemachten Aufnahme extrahieren könnte, bei der Erstellung des dreidimensionalen Geländereferenzmodells nicht ausgewählt werden, da sie sich in der Satellitenaufnahme nicht oder nur undeutlich abheben.

Andere Einflüsse, die zu Abbildungsunterschieden in unterschiedlichen Spektralbereichen führen können, sind die jeweils herrschenden atmosphärischen Bedingungen, sowie die zum jeweiligen Aufnahmezeitpunkt herrschende Tages- oder Jahreszeit. So sind die Konturen eines Teiches im Sommer nachts wegen der Wärmespeicherung des Wassers im Infrarot deutlich erkennbar, während sie sich womöglich in einer Tageslichtaufnahme, die mit einer Kamera im Bereich des sichtbaren Lichts aufgenommen wurde, nur undeutlich von der ebenso glatten Umgebung abheben.

Eine andere Problematik, die bei der Erstellung eines dreidimensionalen Geländereferenzmodells für eine Flugkörpermission auftreten kann, besteht darin, dass zur Erstellung des dreidimensionalen Geländereferenzmodells Geländekonturen aus der Satellitenaufnahme ausgewählt werden, die zwar jeweils für sich vom Suchkopf des Flugkörpers einzeln eindeutig mittels einer Kantenextraktion aus der vom Suchkopf des Flugkörpers gelieferten Aufnahme einer Szene ermittelt werden können, die aber in der zweidimensionalen Perspektive, die der Flugkörpersuchkopf aufnimmt, nicht so eindeutig zuordenbar sind, wie dies bei der dreidimensionalen Sichtweise erscheint. Die Navigationseinrichtung des unbemannten Flugkörpers erkennt dann zwar jeweils die einzelnen Geländekanten in der Szene, kann diese aber nicht korrekt und eindeutig zu Linien des transformierten Geländereferenzmodells zuordnen, wodurch insgesamt die Zuordnung der aufgenommenen Szene zur entsprechenden Perspektive des Geländereferenzmodells scheitert und so die Navigation des unbemannten Flugkörpers anhand dieser Geländedaten nicht möglich ist. Die Zielgenauigkeit des unbemannten Flugkörpers wird dadurch deutlich herabgesetzt.

Derzeit steht einem militärischen Missionsplaner nur eine Sammlung von mehr oder weniger ungenauen Verhaltensregeln zur Verfügung, mittels derer er bei der Auswahl der Geländekanten zur Erstellung des dreidimensionalen Geländereferenzmodells diesen Problemen aus dem Weg gehen könnte. Auch erhält der Missionsplaner keine Rückmeldung nach einer durchgeführten Mission, die es ihm ermöglichen würde, seine Auswahlentscheidungen zu optimieren.

### DARSTELLUNG DER ERFINDUNG

Aufgabe der vorliegenden Erfindung ist es, ein Verfahren zur Optimierung der bildgestützten automatischen Navigation eines unbemannten Flugkörpers anzugeben, das zu einer verbesserten Erstellung von dreidimensionalen Geländereferenzmodellen führt, die zur Navigation von unbemannten Flugkörpern verwendet werden, sodass die Gefahr der Nichterfüllung einer Mission oder die Gefahr des Entstehens von Kollateralschäden deutlich herabgesetzt ist.

Diese Aufgabe wird durch ein Verfahren mit den im Anspruch 1 angegebenen Schritten gelöst.

Das erfindungsgemäße Verfahren umfasst dazu die folgenden Schritte:
a) Erstellen eines Navigationsdaten einer geplanten Flugroute enthaltenden Missionsplans auf der Grundlage von Satelliten- oder Luftbildaufnahmen mittels eines Missionsplanungscomputers, wobei die Navigationsdaten Information über ausgewählte topologische Strukturen enthalten;
b) Laden des Missionsplans in einen Missionscomputer des unbemannten Flugkörpers;
c) Anbringen des unbemannten Flugkörpers an einem Trägerflugzeug;
d) Abfliegen der Flugroute mittels des Trägerflugzeugs, wobei die Navigation des unbemannten Flugkörpers Navigationsdaten des Trägerflugzeugs verwendet;
e) Ausführen einer Bildanalyse im unbemannten Flugkörper während des Fluges, indem von einer Bilderzeugungseinrichtung des unbemannten Flugkörpers erzeugte Bilder der vorausliegenden Strecke auf darin vorhandene topologische Strukturen analysiert werden und die so erhaltene Information über die analysierten topologischen Strukturen zusammen mit den Bilddaten, den Fluglagedaten und den Positionsdaten in einer Speichereinrichtung abgespeichert wird;
f) Übertragen der Daten aus der Speichereinrichtung in einen Computer;
g) Erstellen eines dreidimensionalen Referenzmodells für jene topologischen Strukturen aus den Satelliten- oder Luftbildaufnahmen, die in der Bildanalyse im Schritt e) erkannt worden sind;
h) Berechnung einer zweidimensionalen Ansicht einer topologischen Struktur auf der Grundlage des dreidimensionalen Referenzmodells dieser topologischen Struktur zu einem vorgegebenen Punkt auf der Flugroute unter Berücksichtigung der Fluglage des Flugkörpers an diesem Punkt;
i) Vergleich der zweidimensionalen Ansicht der topologischen Struktur mit der in der Bildanalyse im Schritt e) an diesem Punkt der Flugroute erkannten topologischen Struktur und Bestimmung der Übereinstimmungsgüte;
j) Modifikation des Referenzmodells, falls die Übereinstimmungsgüte unterhalb eines vorgegebenen Wertes liegt;
k) Wiederholung der Schritte h) bis j).

### VORTEILE

Die rekursive Vorgehensweise des erfindungsgemäßen Verfahrens gestattet es, im konkreten Einzelfall eine Optimierung der Navigationsfähigkeit des unbemannten Flugkörpers für einen später geplanten Einsatz vorzunehmen, für welchen das optimierte dreidimensionale Geländereferenzmodell abgespeichert werden kann. Weiterhin ermöglicht es das erfindungsgemäße Verfahren, typische topographische Strukturen, beispielsweise Geländekanten, herauszuarbeiten und nach der Güte ihrer Erkennbarkeitseignung zu klassifizieren, sodass sich daraus ergebende sehr gut erkennbare topologische Strukturen bei der Bildung des dreidimensionalen Geländereferenzmodells künftiger Missionen - auch in anderen geographischen Gebieten - bevorzugt herangezogen werden können.

Besonders bevorzugt ist es, wenn die Modifikation des Referenzmodells im Schritt j) unter Berücksichtigung von witterungsbedingten Parametern erfolgt.

Eine weitere vorteilhafte Ausgestaltung des erfindungsgemäßen Verfahrens zeichnet sich dadurch aus, dass die Modifikation des Referenzmodells im Schritt j) unter Berücksichtigung von tageszeitbedingten Parametern erfolgt.

Vorzugsweise wird bei dem Verfahren eine Bilderzeugungseinrichtung im unbemannten Flugkörper eingesetzt, die im Bereich des sichtbaren Lichts oder der Infrarotstrahlung arbeitet. Eine Bilderzeugungseinrichtung des unbemannten Flugkörpers, die von einer Radarbilderzeugungseinrichtung gebildet ist, kann jedoch ebenfalls bevorzugt werden.

Vorzugsweise zeichnet sich das Verfahren dadurch aus, dass der Vergleich der Information über topographische Strukturen durch Erkennung von Kontrastunterschieden im erzeugten Bild durchgeführt wird, wobei aufgrund des Kontrastunterschiedes Linien und Kanten der topographischen Struktur erkannt werden.

Obwohl der Vergleich der zweidimensionalen Ansicht der topographischen Struktur mit der in der Bildanalyse im Schritt e) an diesem Punkt der Flugroute erkannten topographischen Struktur im Schritt i) auch von einer entsprechend ausgebildeten Bedienperson ausgeführt werden kann, wird er bevorzugt von einem Bildverarbeitungscomputer des unbemannten Flugkörpers automatisch durchgeführt.

Weiter vorteilhaft ist es, wenn das Erstellen des Referenzmodells im Schritt g) manuell, halbautomatisch oder automatisch durchgeführt wird.

Das Erstellen des Missionsplans im Schritt a) wird herkömmlich von einer entsprechend ausgebildeten Bedienperson, einem sogenannten Missionsplaner, durchgeführt. Es ist aber auch denkbar, dass bei Vorliegen einer ausreichend großen Datenbasis und entsprechender Entscheidungsalgorithmen der Schritt a) vom Missionsplanungscomputer ausschließlich automatisch oder zumindest halbautomatisch durchgeführt wird.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine schematische Darstellung eines zur Durchführung des erfindungsgemäßen Verfahrens entsprechend ausgestatteten unbemannten Flugkörpers;
- Fig. 2: eine schematische Darstellung der Avionik eines zur Durchführung des erfindungsgemäßen Verfahrens entsprechend ausgestalteten unbemannten Flugkörpers; und
- Fig. 3: ein Ablaufdiagramm des erfindungsgemäßen Verfahren.

### DARSTELLUNG VON BEVORZUGTEN AUSFÜHRUNGSBEISPIELEN

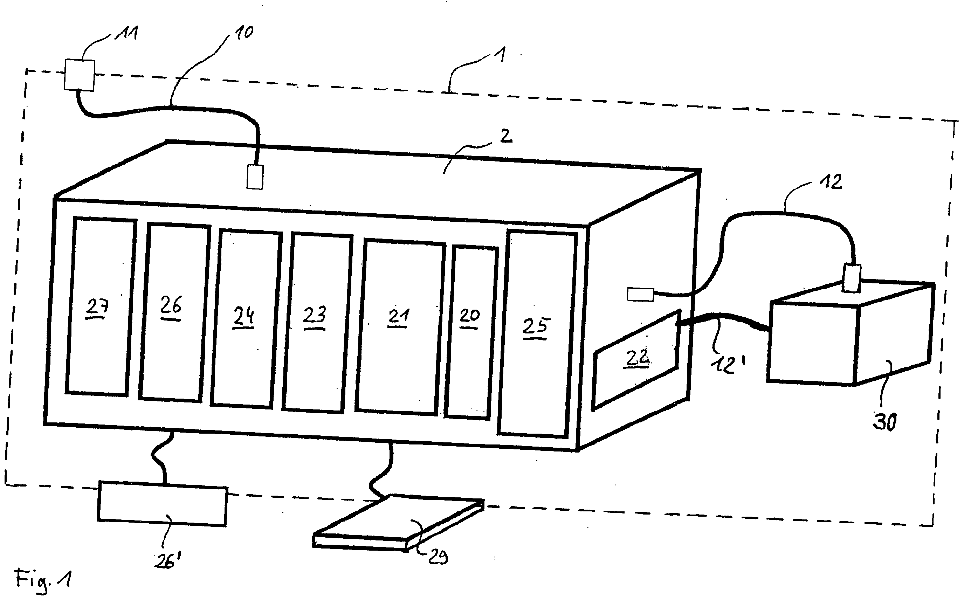

In Fig. 1 ist ein zur Durchführung des erfindungsgemäßen Verfahrens entsprechend ausgestatteter unbemannter Flugkörper 1 schematisch dargestellt. Zur Durchführung des Verfahrens muss dieser Flugkörper nicht dem im militärischen Einsatz verwendeten operationellen Flugkörper entsprechen. Es ist ausreichend, wenn der Flugkörper von einem tragflugfähigen Behälter gebildet wird, der zum Beispiel an einer entsprechenden Waffenstation eines Kampfflugzeugs angebaut werden kann und der dieselben mechanischen und elektrischen Schnittstellen sowie dieselbe Avionik aufweist, wie der operationelle Flugkörper. In der Regel wird man keinen inerten Flugkörper, also keinen dem operationellen Flugkörper entsprechenden Flugkörper ohne Gefechtskopf oder ohne sonstige pyrotechnische Ausstattung verwenden, weil operationelle Flugkörper dieser Art konstruktions- und einsatzbedingt nur für eine geringe Anzahl von Tragflug-Flugstunden zugelassen sind. Übliche Nutzlastbehälter für Kampfflugzeuge sind dagegen für ein Vielfaches von Betriebsstunden zugelassen, sodass es sich anbietet, einen entsprechenden Nutzlastbehälter entsprechend mit der Avionik und den Schnittstellen eines operationellen Flugkörpers auszurüsten und diesen dann für die Durchführung des erfindungsgemäßen Verfahrens zu verwenden.

In den Flugkörper 1 ist ein Gestell 2 (nachstehend auch als "Avionikgestell" bezeichnet) eingebaut, das zumindest die nachfolgend aufgeführten AvionikElemente des operationellen Flugkörpers aufnimmt. Dieses Avionikgestell nimmt die Avionik auf, die zumindest die nachfolgend aufgeführten Elemente aufweist:
- einen Hauptrechner (CWC) 20, der mit einer Schnittstelle zur Avionik des Trägerflugzeugs versehen ist und der die Missionsplanverwaltung ausführt;
- ein Navigationssystem (NAVC) 21 mit einer inertialen Messeinheit (IMU) und einem Satellitennavigationsempfänger (GPS);
- einem Suchkopf (SIC) 30, der einen abbildenden Sensor und ein Gimbal-System aufweist und mit einem Bildverarbeitungscomputer (IPC) 23 verbunden ist, der mit einer Graphikkarte zur Visualisierung der aus einer Bilderszene extrahierten Kanten sowie zur Anzeige der Übereinstimmungsgüte (matching process) ausgestattet ist;
- Schnittstellen (TLP-Feld) 24 zum Laden eines Missionsplans und zum Laden von Kryptographie-Code-Daten für den Satellitennavigationsempfänger;
- eine Stromversorgungseinheit (PS) 25, die auf gleiche Weise, wie dies im operationellen Flugkörper geschieht, die vom Trägerflugzeug gelieferte Energie (typischerweise 3 x 115 V 400 Hz) für die internen Verbraucher des Flugkörpers aufbereitet und diesen zur Verfügung stellt;
- ein Telemetriemodul 26, welches mit am Flugkörper 1 angebrachten Telemetrieantennen 26' verbunden ist;
- ein Bildaufzeichnungsmodul 27 zur Aufzeichnung von Standbild oder Bewegtbilddaten.

Des weiteren ist ein Datenlinkmodul 28 vorgesehen, das die Aufzeichnung von sensierten Daten und Suchkopfbildsequenzen auf ein optionales Speichermodul, beispielsweise das Bildaufzeichnungsmodul 27, ermöglicht. Das Datenlinkmodul 28 ist außerdem in der Lage, die sensierten Daten und/oder die SuchkopfBildsequenzen einem Datenübertragungssystem des Trägerflugzeugs oder einer eigenen integrierten Datenübertragungsanlage, beispielsweise dem Telemetriemodul 26, zur Verfügung zu stellen, damit diese Daten per Funk zum Beispiel an eine Bodenstation übertragen werden können.

Weiterhin ist an den Flugkörper 1 ein Radarhöhenmesser (RALT) 29 anbau- und anschließbar, der dem Radarhöhenmesser des operationellen Flugkörpers entspricht.

Es ist nicht unbedingt erforderlich, dass der Flugkörper 1 mit einem eigenständigen Navigationssystem versehen ist, sondern statt dessen könnten auch die Navigationsdaten des Trägerflugzeugs über die sogenannte Umbilical-Verbindung 10 zwischen dem - nicht gezeigten - Trägerflugzeug und der Avionik des Flugkörpers 1 dieser zur Verfügung gestellt werden. Der Flugkörper 1 ist zur elektrischen Koppelung und zur Datenkoppelung mit dem Trägerflugzeug mit einer sogenannten Umbilical-Schnittstelle 11 in der Umbilical-Verbindung 10 versehen.

Schließlich ist im Avionikgestell 2 des unbemannten Flugkörpers 1 in einer Kühlmittelflasche ein Kühlmittelvorrat 22 vorgesehen, der zur Kühlung des als Infrarotsuchkopf ausgebildeten Suchkopfs 30 dient. Üblicherweise ist der Suchkopf 30 nicht im Avionikgestell 2 untergebracht, sondern in der Nase des unbemannten Flugkörpers 1, und ist über Verbindungsleitungen 12 mit der Avionik und über eine Kühlfluidleitung 12' mit dem Kühlmittelvorrat 22 im Avionikgestell 2 verbunden.

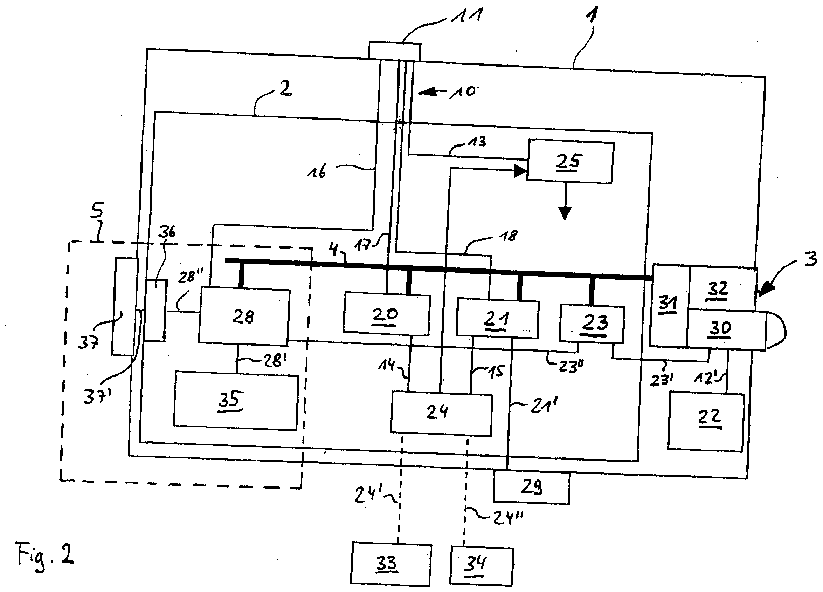

Fig. 2 zeigt schematisch das Zusammenwirken der einzelnen Elemente der Avionik, die dieselbe ist wie im operationellen Flugkörper. Bei allen Baugruppen der Avionik handelt es sich um originale Serienbaugruppen des operationellen Flugkörpers. Für die zusätzlich vorgesehenen Aufzeichnungs- und Datenlink-Elemente können kommerzielle, geeignet ausgestaltete Elemente mit Flugzulassung verwendet werden.

Fig. 2 zeigt die schematische Verbindung der einzelnen Avionikelemente untereinander. Das Datenlinkmodul 28, der Hauptrechner 20, das Navigationssystem 21, der Bildverarbeitungscomputer 23 sind über einen Datenbus 4 miteinander zum Datenaustausch elektrisch verbunden. An den Datenbus 4 angeschlossen ist auch eine Schnittstelle 31 eines den Suchkopf 30 sowie die innertiale Meßeinheit 32 aufweisenden Suchkopfblocks 3.

Die Stromversorgungseinheit 25 ist über eine Stromversorgungsleitung 13 der Umbilical-Verbindung 10 mit der Umbilical-Schnittstelle 11 verbunden und erhält über die Umbilical-Verbindung 10 elektrische Energie aus dem Trägerflugzeug.

Der Hauptrechner 20 und das Navigationssystem 21 sind jeweils über eine Datenleitung 14, 15 mit dem Schnittstellenfeld 24 verbunden. An das Schnittstellenfeld 24 sind über entsprechende Leitungen 24', 24" ein Bodenladegerät (Ground Loader Unit) 33 und ein Gerät 34 zum Laden von Kryptographiecodes für den Satellitenempfänger mit der Avionik verbindbar.

An das Navigationssystem 21 ist außerdem der Radarhöhenmesser 29 mittels einer Verbindungsleitung 21' anschließbar.

Der Bildverarbeitungscomputer 23 steht über eine erste Signalleitung 23' mit dem Suchkopf 30 und über eine zweite Signalleitung 23" mit dem Datenlinkmodul 28 in Verbindung. Der Suchkopf 30 steht über eine Kühlfluidleitung 12' mit dem Kühlmittelvorrat 22 in Verbindung.

Dem Datenlinkmodul 28 ist ein Speichermodul 35 zugeordnet, welches mit dem Datenlinkmodul 28 zum Datenaustausch über eine erste Datenlinkleitung 28' verbunden ist. Weiterhin ist mit dem Datenlinkmodul 28 über eine zweite Datenlinkleitung 28" ein Sender 36 verbunden, an den wiederum externe Antennen 37 mit einer Antennenleitung 37' angeschlossen sind.

Schließlich ist das Datenlinkmodul 28 über eine Datenlink-Verbindungsleitung 16, die Bestandteil der Umbilical-Verbindung 10 ist, mit der Umbilical-Schnittstelle 11 und über diese mit dem Trägerflugzeug verbunden.

Die Umbilical-Verbindung 10 weist weiterhin Datenaustauschleitungen 17 auf, über die die Umbilical-Schnittstelle 11 und damit das Trägerflugzeug mit dem Hauptrechner 20 verbunden ist. Schließlich weist die Umbilical-Verbindung 10 noch eine GPS-Signalleitung 18 auf, über die das Navigationssystem 21 mit der Umbilical-Schnittstelle 11 und damit mit dem Trägerflugzeug verbunden ist.

In Fig. 2 gestrichelt umgrenzt ist der Bereich 5 der Avionik, der gegenüber einem operationellen Serienflugkörper zur Durchführung des erfindungsgemäßen Verfahrens zusätzlich vorgesehen ist. Dieser Bereich umfaßt im wesentlichen das Datenlinkmodul 28, das Speichermodul 35, den Sender 36 und die Datenlinkantennen 37.

Zusätzlich zu dieser Hardwareabweichung ist auch eine gegenüber dem Serienstandard des operationellen Flugkörpers abgewandelte Software des Hauptrechners 20 vorgesehen. Dieses Softwarederivat der operationellen Missionssoftware enthält nur jene Softwareelemente, die zur Steuerung des im speziell für dieses Verfahren ausgelegten, unbemannten Flugkörpers erforderlich sind. Die Umbilical-Schnittstelle 11 zum Trägerflugzeug entspricht hingegen jener, die auch beim operationellen Flugkörper vorgesehen ist. Dasselbe gilt für die Schnittstelle zu der Bodenladeeinheit (GLU) 33 mit welcher der Missionsplan in die Avionik des unbemannten Flugkörpers 1 geladen wird. Auch das Gerät 34 zum Laden der Kryptographiecodes für den Satellitenempfänger entspricht dem des operationellen Flugkörpers.

Der in die Avionik 2 des für das erfindungsgemäße Verfahren ausgebildeten unbemannten Flugkörpers 1 geladene Missionsplan ist gleichartig aufgebaut wie ein Missionsplan für den Einsatz in einem operationellen Flugkörper und kann daher mit den gleichen Planungsmitteln erstellt werden wie dieser. Somit kann dieselbe Bodeninfrastruktur benutzt werden, die bei den Streitkräften für den operationellen Flugkörper bereits vorhanden ist. Auch das Trägerflugzeug, das bereits für den Verschuß des operationellen Flugkörpers vorgesehen ist, kann ohne Modifikation als Träger des für das erfindungsgemäße Verfahren ausgestatteten unbemannten Flugkörpers 1 verwendet werden. Daraus folgt auch, dass der für das erfindungsgemäße Verfahren ausgestaltete unbemannte Flugkörper 1 zusätzlich auch vom Bodenpersonal zum Training von operationellen Abläufen des Flugkörpereinsatzes am Boden verwendet werden kann, zum Beispiel zum Testen des Flugkörpers, zum Laden von Missionsplänen und Kryptographiecodes, oder zum Anbringen des Flugkörpers an einem Trägerflugzeug oder zum Testen der Avionik.

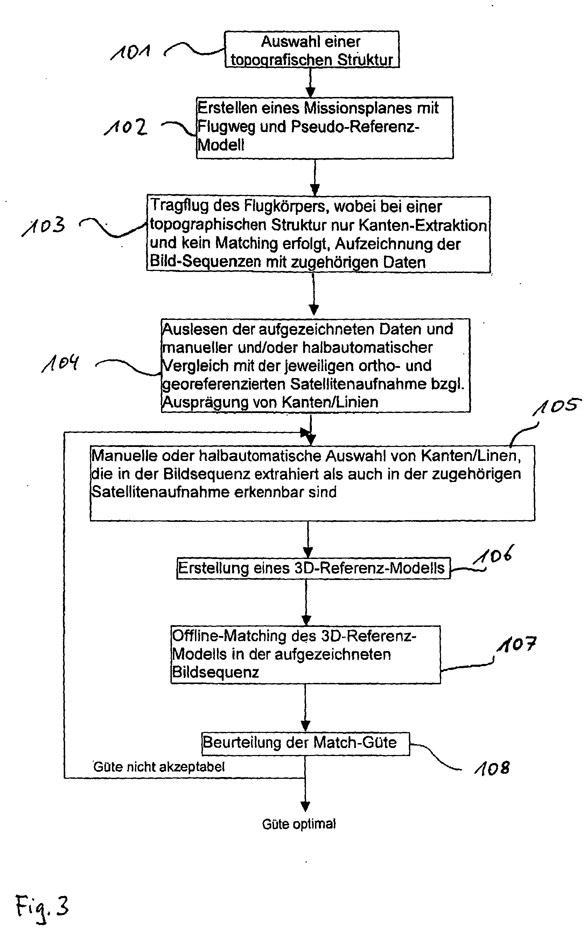

Die Durchführung des erfindungsgemäßen Verfahrens wird nachfolgend anhand des Flußdiagramms der Fig. 3 beschrieben.

Bezugszeichen in den Ansprüchen, der Beschreibung und den Zeichnungen dienen lediglich dem besseren Verständnis der Erfindung und sollen den Schutzumfang nicht einschränken.

Im Verfahrensschritt 101 werden zunächst aus einem vorhandenen Luftbild oder Satellitenbild topographische Strukturen ausgewählt, die jeweils als Landmarke für eine bildgestüzte Navigation oder als Angriffsziel tauglich erscheinen und die mit etwaigen operationellen Zielen topographische, geometrische Ähnlichkeiten aufweisen. Diese Strukturen werden so ausgewählt, dass sie mittels eines bemannten Trägerflugzeugs gefahrlos überflogen werden können. Bei der Auswahl werden die Koordinaten der Mittelpunkte der Landmarken bestimmt und ausgewählt.

Im Schritt 102 wird nun mit den Planungsmitteln des operationellen Flugkörpers ein Missionsplan erstellt, dessen Flugweg für die Marschphase des unbemannten Flugkörpers die vorher gewählten Landmarken jeweils überfliegt und dessen Zieltrajektorie in der Landmarke, die als Ziel bestimmt ist, endet. Die Landmarken werden nicht als vollständige dreidimensionale Georeferenzmodelle modelliert, sondern es werden nur die jeweiligen Mittelpunkte in den Missionsplan als sogenannte Pseudo-Landmarken integriert, wobei der Suchkopf beim Überflug des unbemannten Flugkörpers auf die Landmarke ausgerichtet wird, so dass während der kurzen Überflugzeit diese Landmarke im Blickfeld des Suchkopfes gehalten wird. Dieser Missionsplan enthält zudem noch alle anderen notwendigen Elemente eines operationellen Missionsplanes, wie den vorgesehenen Ort der Ablösung des unbemannten Flugkörpers vom Trägerflugzeug (Releasepoint), Wegepunkte, Kontrollpunkte, Geländedatenbasis usw. wie sie auch bei einer operationellen Missionsplanung in den Missionsplan eingefügt werden.

Der so erzeugt Missionsplan wird dann mittels der Bodenladeeinheit (GLU) 33 über eine entsprechende Schnittstelle im Schnittstellenfeld 24 in die Avionik des Flugkörpers 1 geladen und dort im Hauptrechner 20 gespeichert. Dieses Laden des Missionsplans erfolgt auf die gleiche Weise wie dies auch bei der Verwendung eines operationellen Flugkörpers der Fall ist. Zudem werden bei Bedarf die Kryptographiecodes mittels des Geräts 34 zum Laden der Kryptographiecodes in den Satellitenempfänger des Navigationssystems 21 geladen. Die Geräte für die Datenaufzeichnung und das den Kühlmittelvorrat 22 aufweisende Gerät werden entsprechend für den Einsatz vorbereitet.

Der unbemannte Flugkörper 1 wird dann an eine für die Anbringung eines operationellen Flugkörpers bestimmte Waffenstation des Trägerflugzeugs angebaut und die standardmäßigen Bodentests vor dem Start des Trägerflugzeugs werden durchlaufen.

Es erfolgt dann im Schritt 103 der Tragflug des unbemannten Flugkörpers am Trägerflugzeug. Nach dem Start des Trägerflugzeugs wird der im Missionsplan vorgeplante Releasepoint angeflogen und an diesem Releasepoint wird von der Besatzung des Trägerflugzeugs ein simulierter Release, also eine simulierte Ablösung des unbemannten Flugkörpers vom Trägerflugzeug, durchgeführt. Bei diesem simulierten Release, der im Wesentlichen dem Abwerfen eines operationellen Flugkörpers entspricht, werden jedoch die Bombenschlösser, die den unbemannten Flugkörper an der Waffenstation des Trägerflugzeugs fixieren, nicht geöffnet und die Energieversorgung des unbemannten Flugkörpers durch das Trägerflugzeug wird aufrechterhalten.

Der Hauptrechner 20 des unbemannten Flugkörpers simuliert während der Release-Sequenz das Verhalten eines operationellen Flugkörpers.

Nach dem erfolgten simulierten Release fliegt das Trägerflugzeug mit dem noch angekoppelten unbemannten Flugkörper den im Missionsplan des Flugkörpers vorgegebenen Flugweg (Marsch- und Angriffs-Trajektorie) ab, wobei der Suchkopf des unbemannten Flugkörpers jeweils bei Annäherung an eine im Schritt 101 selektierte topographische Struktur auf den zugehörigen Mittelpunkt ausgerichtet wird. Die vom Suchkopf aufgenommenen Bilder werden dem Bildverarbeitungscomputer 23 zugeführt und dieser analysiert die Bilder dann aufgrund von Kontrastunterschieden auf das Vorliegen von Linien und Kanten hin. Die dabei aufgefunden Linien werden dann in das jeweilige aufgenommene Bild, vorzugsweise farbig, mittels Überlagerungstechnik eingefügt. Die für jede topographische Struktur entstehende Bildsequenz wird samt zugehöriger Flugdaten und dem Sichtlinienwinkel des Suchkopfs in einem Speichermodul der Avionik aufgezeichnet. Da für jede topographische Struktur nur deren Mittelpunkt im Missionsplan enthalten ist, führt der Bildverarbeitungscomputer zu dieser Zeit keinen Vergleich, also keine Zuordnung von aus dem Bild extrahierten zweidimensionalen Szenenkonturen zu einer jeweiligen berechneten zweidimensionalen Perspektive eines Georeferenzmodells durch. Aus diesem Grund ist es nicht erforderlich, dem Bildverarbeitungscomputer eine besondere Auswertesoftware aufzuspielen. Für die Abspeicherung dieser Daten steht dem Satellitenempfänger des unbemannten Flugkörpers das GPS-Signal des Trägerflugzeugs zur Verfügung und die Navigationsdaten des Trägerflugzeugs werden über die Umbilical-Verbindung 10 und den Datenbus 4 zyklisch in die Avionik des unbemannten Flugkörpers übertragen, so dass das Navigationssystem des unbemannten Flugkörpers hochgenau navigieren kann.

Nachdem der Missionsplan abgeflogen worden ist, landet das Trägerflugzeug einschließlich des an ihm angebrachten unbemannten Flugkörpers. Die gespeicherten Videosequenzen werden dann aus dem Datenspeicher im Schritt 104 ausgelesen und auf einer herkömmlichen Missionsplanungsstation, die für den operationellen Einsatz ausgestaltet ist, eingelesen.

Jetzt analysiert der Missionsplaner im Schritt 105 an der Missionsplanungsstation jede Bildsequenz und vergleicht die darin vom Bildverarbeitungsrechner des unbemannten Flugkörpers extrahierten Linien mit den Strukturen, die in der jeweiligen, zur Missionsplanung herangezogenen Satellitenaufnahme enthalten sind. Auf diese Weise kann der Missionsplaner Erfahrungswerte darüber sammeln, welchen Einfluß die unterschiedlichen Spektralbereiche des Bildsensors im Satelliten und des Bildsensors im Flugkörper auf die Ausprägung von Linien und Kanten haben. Lerneffekte werden ebenso erzielt hinsichtlich des Einflusses von atmosphärischen Bedingungen sowie tageszeitlichen und jahreszeitlichen Besonderheiten.

Der Missionsplaner erstellt dann im Schritt 106 in gewohnter Weise für jede selektierte topographische Struktur ein dreidimensionales Georeferenzmodell, wobei er jene Linien und/oder Kanten aus der jeweiligen Satellitenaufnahme auswählt, die auch vom Bildverarbeitungsrechner des unbemannten Flugkörpers in der zugehörigen Bildsequenz extrahiert wurden. Dieses Erstellen des dreidimensionalen Georeferenzmodells kann manuell oder halbautomatisch erfolgen. Ein Georeferenzmodell ist eine als dreidimensionales Linienmodell abgebildete, in der realen Landschaft vorhandene Struktur. Ist die Blickrichtung bekannt, so lässt sich aus diesem dreidimensionalen Linienmodell eine zweidimensionale Perspektive berechnen, die unter diesem Blickwinkel (Euler-Winkel) gesehen wird.

Auf der Missionsplanungsstation ist die Software zur Segmentierung und zum Abgleich (Matching) ablauffähig installiert, die auch im Bildverarbeitungscomputer 23 des unbemannten, operationellen Flugkörpers läuft. Dem Algorithmus dieser Software werden nun im Schritt 107 das dreidimensionale Georeferenzmodell, die Videosequenz einschließlich der jedem Bild zugeordneten Flugdaten (Position, Geschwindigkeit und Euler-Winkel) sowie die Sichtlinienwinkel des Suchkopfes bei der Aufnahme eines jeden Bildes zugeführt. Der Algorithmus ist somit in der Lage, für jedes Bild aus der aktuellen Fluglage eine zweidimensionale Perspektive des dreidimensionalen Georeferenzmodells zu berechnen, anschließend aus dieser zweidimensionalen Perspektive eine zweidimensionale Referenzstruktur von Linien und Kanten herauszuarbeiten und diese zweidimensionale Referenzstruktur mit den im Schritt 103 vom Bildverarbeitungscomputer 23 des unbemannten Flugkörpers 1 aus einer aufgenommenen Szene extrahierten Linien zu vergleichen und die extrahierten Linien den aus der zweidimensionalen Referenzstruktur abgeleiteten Linien zuzuordnen.

Ob diese Zuordnung eindeutig erfolgt ist, beurteilt der Missionsplaner dann im Schritt 108 an unterschiedlichen Gütekriterien, die der Algorithmus ausgibt und die auch im operationellen Flugkörper Anwendung finden. Zudem können die unterschiedlichen Linienarten (extrahierte Linien, nicht zugeordnete Linien, Linien der zweidimensionalen Referenzstruktur, extrahierte und zur zweidimensionalen Referenzstruktur zugeordnete Linien) mit unterschiedlichen Farben dem Missionsplaner dargeboten werden, wodurch er einen optischen Eindruck von der Zuordnungsgüte erhält.

Falls keine eindeutige Zuordnung oder nur eine Zuordnung mit ungenügender Güte erfolgt, modifiziert der Missionsplaner das dreidimensionale Georeferenzmodell, indem er zum Schritt 105 zurückspringt und den Schritt 105 sowie die nachfolgenden Schritte 106 bis 108 mit geänderten Parametern erneut durchläuft.

Der Missionsplaner modifiziert dabei im erneut durchlaufenen Schritt 106 das dreidimensionale Referenzmodell solange bis sich das für die jeweilige Bildsequenz beste Zuordnungsergebnis einstellt. Falls sich keine zufriedenstellende Zuordnungsgüte einstellt, können folgende Gründe ursächlich sein:
- Die geometrischen und/oder geographischen Fehler des dreidimensionalen Georeferenzmodells, die bei der Ortho- und Georeferenzierung aufgetreten sind, sind zu groß, wodurch sich unzutreffende zweidimensionale Referenzstrukturen ergeben. Dieser Fehler kann während der Zuordnungssimulation an entsprechenden Versätzen von Elementen der zweidimensionalen Referenzstruktur zu den extrahierten Linien erkannt werden;
- die aufgezeichneten Flugdaten sind zu ungenau, wodurch sich ebenfalls unzutreffende zweidimensionale Referenzstrukturen ergeben. Diese Navigationsungenauigkeit kann durch Analyse des aufgezeichneten GPS-Verhaltens (z. B. keine Verbindung zu einer ausreichenden Anzahl von Satelliten) oder auch durch Vergleich mit den aufgezeichneten Navigationsdaten des Trägerflugzeugs erkannt werden;
- die topographische Struktur ist für dieses Verfahren der Kantenextraktion und der Referenzmodellzuordnung ungeeignet.

Falls es sich bei dem dreidimensionalen Georeferenzmodell um das Referenzmodell eines Angriffziels handelt, kann zudem mit der Simulation untersucht werden, ob die Zuordnungsgüte ausreichend ist, damit eine im operationellen Flugkörper vorgesehene Zielverfolgungseinrichtung (Ziel-Trakker) das Ziel erfassen und verfolgen kann.

Nachdem dieses Verfahren durchgeführt worden ist und eine akzeptabel Zuordnungsgüte erreicht worden ist, kann das auf diese Weise optimierte dreidimensionale Georeferenzmodell zur Verifizierung in den Missionsplan integriert werden. Der auf diese Weise geänderte Missionsplan wird dann erneut in einen für den Tragflug vorbereiteten unbemannten Flugkörper geladen und das bemannte Trägerflugzeug fliegt einschließlich des angehängten unbemannten Flugkörpers den Missionsplan im vorgeplanten Flugweg erneut ab. Bei diesem Verifikationsflug erfolgt dann für jede topographische Struktur die Zuordnung der vom Bildverarbeitungscomputer aus den vom Sensor des unbemannten Flugkörpers aufgenommenen Bildern extrahierten Kanten und Linien zu den Linienstrukturen des dreidimensionalen Referenzmodells. Die entsprechenden Bildsequenzen werden aufgezeichnet und später an der Missionsplanungsstation auf ihre Zuordnungsgüte hin analysiert. Somit kann der Missionsplaner feststellen, wie gut seine Überarbeitung des Referenzmodells gelungen ist, und er kann auf diese Weise entsprechende Lerneffekte erzielen und bei Bedarf das dreidimensionale Georeferenzmodell weiter optimieren.

An Stelle eines bemannten Trägerflugzeugs kann der unbemannte Flugkörper auch an einem unbemannten Trägerflugzeug angebracht werden, beispielsweise an einem gegen Radaraufklärung nahezu unsichtbaren Trägerluftfahrzeug. Diese Kombination ist dann in der Lage, unbemerkt und tief in gegnerisches Gebiet einzudringen und die topographischen Strukturen aufzuklären, die bei einem anschließenden operationellen Einsatz für die bildgestüzte Navigation und Zielerkennung in Frage kommen. Auf diese Weise können vor Ort optimierte, operationelle Missionspläne erstellt werden, bei denen die Treffergenauigkeit wesentlich erhöht und damit das Entstehen von Kollateralschäden deutlich reduziert ist.

Um dem gesamten Verfahrensablauf zu beschleunigen, können die vom Suchkopf aufgenommenen Bildsequenzen und die zugehörigen Navigationsdaten und Sichtwinkeldaten auch während des Fluges über eine Datenfunkverbindung telemetrisch zu einer Missionplanungsstation übertragen werden, so dass dort bereits während des Überfliegens eines Geländes die entsprechende Auswertung und Optimierung des Missionsplanes erfolgen kann.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: unbemannter Flugkörper
- 2: Avionikgestell
- 4: Datenbus
- 10: Umbilical-Verbindung
- 11: Umbilical-Schnittstelle
- 12: Verbindungsleitung
- 12': Kühlfluidleitung
- 16: Datenlink-Verbindungsleitung
- 17: Datenaustauschleitungen
- 18: Signalleitung
- 20: Hauptrechner (CWC)
- 21: Navigationssystem (NAVC)
- 21': Verbindungsleitung
- 22: Kühlmittelvorrat
- 23: Bildverarbeitungscomputer (IPC)
- 23': erste Signalleitung
- 23": zweite Signalleitung
- 24: Schnittstellen (TLP-Feld)
- 25: Stromversorgungseinheit (PS)
- 26: Telemetriemodul
- 26': Telemetrieantennen
- 27: Bildaufzeichnungsmodul
- 28: Datenlinkmodul
- 28': erste Datenlinkleitung
- 28": zweite Datenlinkleitung
- 29: Radarhöhenmesser (RALT)
- 30: Suchkopf (SIC)
- 33: Bodenladeeinheit (GLU)
- 34: Gerät zum Laden der Kryptographiecodes
- 35: Speichermodul
- 36: Sender
- 37: externe Antenne
- 37': Antennenleitung

## Patentansprüche

1. Verfahren zur Optimierung der bildgestützten automatischen Navigation eines unbemannten Flugkörpers (1) mit den Schritten:
a) Erstellen (102) eines Navigationsdaten einer geplanten Flugroute enthaltenden Missionsplans auf der Grundlage von Satelliten- oder Luftbildaufnahmen mittels eines Missionsplanungscomputers, wobei die Navigationsdaten Information über ausgewählte topologische oder topografische Strukturen enthalten;
b) Laden des Missionsplans in einen Missionscomputer des unbemannten Flugkörpers;
c) Anbringen des unbemannten Flugkörpers an einem Trägerflugzeug;
d) Abfliegen (103) der Flugroute mittels des Trägerflugzeugs, wobei die Navigation des unbemannten Flugkörpers Navigationsdaten des Trägerflugzeugs verwendet;
e) Ausführen einer Bildanalyse im unbemannten Flugkörper während des Fluges, indem von einer Bilderzeugungseinrichtung des unbemannten Flugkörpers erzeugte Bilder der vorausliegenden Strecke auf darin vorhandene topologische oder topografische Strukturen analysiert werden und die so erhaltene Information über die analysierten topologischen oder topografische Strukturen zusammen mit den Bilddaten, den Fluglagedaten und den Positionsdaten in einer Speichereinrichtung abgespeichert wird;
f) Übertragen der Daten aus der Speichereinrichtung in einen Computer;
g) Erstellen (106) eines dreidimensionalen Referenzmodells für jene topologischen oder topografischen Strukturen aus den Satelliten-oder Luftbildaufnahmen, die in der Bildanalyse im Schritt e) erkannt worden sind;
h) Berechnung einer zweidimensionalen Ansicht einer topologischen oder topografischen Struktur auf der Grundlage des dreidimensionalen Referenzmodells dieser topologischen oder topografischen Struktur zu einem vorgegebenen Punkt auf der Flugroute unter Berücksichtigung der Fluglage des Flugkörpers an diesem Punkt;
i) Vergleich der zweidimensionalen Ansicht der topologischen oder topografischen Struktur mit der in der Bildanalyse im Schritt e) an diesem Punkt der Flugroute erkannten topologischen oder topografischen Struktur und Bestimmung (108) der Übereinstimmungsgüte;
j) Modifikation des Referenzmodells, falls die Übereinstimmungsgüte unterhalb eines vorgegebenen Wertes liegt;
k) Wiederholung der Schritte h) bis j).

2. Verfahren zur Optimierung der bildgestützten automatischen Navigation eines unbemannten Flugkörpers nach Anspruch 1,
**dadurch gekennzeichnet, dass** die Modifikation des Referenzmodells im Schritt j) unter Berücksichtigung von witterungsbedingten Parametern erfolgt.

3. Verfahren zur Optimierung der bildgestützten automatischen Navigation eines unbemannten Flugkörpers nach Anspruch 1 oder 2,
**dadurch gekennzeichnet, dass** die Modifikation des Referenzmodells im Schritt j) unter Berücksichtigung von tageszeitbedingten Parametern erfolgt.

4. Verfahren zur Optimierung der bildgestützten automatischen Navigation eines unbemannten Flugkörpers nach einem der vorhergehenden Schritte,
**dadurch gekennzeichnet, dass** die Bilderzeugungseinrichtung des unbemannten Flugkörpers im Bereich des sichtbaren Lichtes oder der Infrarotstrahlung arbeitet.

5. Verfahren zur Optimierung der bildgestützten automatischen Navigation eines unbemannten Flugkörpers nach einem der Ansprüche 1 bis 3, **dadurch gekennzeichnet, dass** die Bilderzeugungseinrichtung eine Radarbilderzeugungseinrichtung ist.

6. Verfahren zur Optimierung der bildgestützten automatischen Navigation eines unbemannten Flugkörpers nach einem der vorhergehenden Ansprüche,
**dadurch gekennzeichnet, dass** der Vergleich der Information über topologische oder topografischen Strukturen durch Erkennung von Kontrastunterschieden im erzeugten Bild durchgeführt wird, wobei aufgrund des Kontrastunterschiedes Linien und Kanten der topologischen oder topografischen Struktur erkannt werden.

7. Verfahren zur Optimierung der bildgestützten automatischen Navigation eines unbemannten Flugkörpers nach einem der vorhergehenden Ansprüche,
**dadurch gekennzeichnet, dass** der Vergleich im Schritt i) von einem Bildverarbeitungscomputer des unbemannten Flugkörpers automatisch durchgeführt wird.

8. Verfahren zur Optimierung der bildgestützten automatischen Navigation eines unbemannten Flugkörpers nach einem der vorhergehenden Ansprüche,
**dadurch gekennzeichnet, dass** das Erstellen des Referenzmodells im Schritt g) manuell, halbautomatisch oder automatisch durchgeführt wird.

## Claims

1. Method for optimizing the image-assisted automatic navigation of an unmanned missile (1), comprising the following steps:
a) creating (102) a mission plan containing navigation data of a planned flight route on the basis of satellite or aerial image recordings by means of a mission planning computer, wherein the navigation data contain information about selected topological or topographic structures;
b) loading the mission plan into a mission computer of the unmanned missile;
c) attaching the unmanned missile to a carrier aircraft;
d) flying (103) the flight route by means of the carrier aircraft, wherein the navigation of the unmanned missile uses navigation data of the carrier aircraft;
e) carrying out an image analysis in the unmanned missile during the flight by virtue of images of the path ahead, produced by an image production device of the unmanned missile, being analysed in respect of topological or topographic structures present therein and the information obtained thus about the analysed topological or topographic structures being stored together with the image data, the flight attitude data and the position data in a memory device;
f) transferring the data from the memory device into a computer;
g) creating (106) a three-dimensional reference model for those topological or topographic structures from the satellite or aerial image recordings which were identified in the image analysis in step e);
h) calculating a two-dimensional view of a topological or topographic structure on the basis of the three-dimensional reference model of this topological or topographic structure at a predetermined point on the flight route, taking into account the flight attitude of the missile at this point;
i) comparing the two-dimensional view of the topological or topographic structure with the topological or topographic structure detected at this point of the flight route in the image analysis in step e) and determining (108) the correspondence quality;
j) modifying the reference model should the correspondence quality lie below a predetermined value;
k) repeating steps h) to j).

2. Method for optimizing the image-assisted automatic navigation of an unmanned missile according to Claim 1,
**characterized in that** the reference model is modified in step j) taking into account weather-dependent parameters.

3. Method for optimizing the image-assisted automatic navigation of an unmanned missile according to Claim 1 or 2,
**characterized in that** the reference model is modified in step j) taking into account time-of-day-dependent parameters.

4. Method for optimizing the image-assisted automatic navigation of an unmanned missile according to any one of the preceding steps,
**characterized in that** the image production device of the unmanned missile works in the region of visible light or of infrared radiation.

5. Method for optimizing the image-assisted automatic navigation of an unmanned missile according to any one of Claims 1 to 3,
**characterized in that** the image production device is a radar image production device.

6. Method for optimizing the image-assisted automatic navigation of an unmanned missile according to any one of the preceding claims,
**characterized in that** the information about topological or topographic structures is compared by identifying contrast differences in the produced image, wherein lines and edges of the topological or topographic structure are identified on account of the contrast difference.

7. Method for optimizing the image-assisted automatic navigation of an unmanned missile according to any one of the preceding claims,
**characterized in that** the comparison in step i) is carried out automatically by an image processing computer of the unmanned missile.

8. Method for optimizing the image-assisted automatic navigation of an unmanned missile according to any one of the preceding claims,
**characterized in that** the reference model is created manually, semi-automatically or automatically in step g).

## Revendications

1. Procédé d'optimisation de la navigation automatique assistée par image d'un objet volant sans pilote (1), comprenant les étapes suivantes :
a) création (102) d'un plan de mission contenant des données de navigation d'un itinéraire de vol prévu en se basant sur des enregistrements satellitaires ou d'images aériennes au moyen d'un ordinateur de planification de mission, les données de navigation contenant des informations à propos de structures topologiques ou topographiques choisies ;
b) chargement du plan de mission dans un ordinateur de mission de l'objet volant sans pilote ;
c) accrochage de l'objet volant sans pilote à un aéronef porteur ;
d) décollage (103) pour l'itinéraire de vol au moyen de l'aéronef porteur, la navigation de l'objet volant sans pilote utilisant des données de navigation de l'aéronef porteur ;
e) exécution d'une analyse d'image dans l'objet volant sans pilote pendant le vol, en ce que les images du tronçon à venir, générées par un dispositif de génération d'images de l'objet volant sans pilote, sont soumises à une analyse des structures topologiques ou topographiques qui s'y trouvent et les informations ainsi obtenues sur les structures topologiques ou topographiques sont enregistrées dans un dispositif à mémoire conjointement avec les données d'image, les données d'assiette et les données de position ;
f) transmission des données depuis le dispositif à mémoire dans un ordinateur ;
g) création (106) d'un modèle de référence tridimensionnel pour les structures topologiques ou topographiques des enregistrements satellitaires ou d'images aériennes qui ont été reconnues dans l'analyse d'image à l'étape e) ;
h) calcul d'une vue bidimensionnelle d'une structure topologique ou topographique sur la base du modèle de référence tridimensionnel de cette structure topologique ou topographique sur un point prédéfini sur l'itinéraire de vol en tenant compte de l'assiette de l'objet volant à ce point ;
i) comparaison de la vue bidimensionnelle de la structure topologique ou topographique avec la structure topologique ou topographique reconnue à ce point de l'itinéraire de vol dans l'analyse d'image à l'étape e) et détermination (108) de la qualité de concordance ;
j) modification du modèle de référence dans le cas où la qualité de concordance est inférieure à une valeur prédéfinie ;
k) répétition des étapes h) à j).

2. Procédé d'optimisation de la navigation automatique assistée par image d'un objet volant sans pilote selon la revendication 1, **caractérisé en ce que** la modification du modèle de référence à l'étape j) est effectuée en tenant compte de paramètres dépendant des conditions météorologiques.

3. Procédé d'optimisation de la navigation automatique assistée par image d'un objet volant sans pilote selon la revendication 1 ou 2, **caractérisé en ce que** la modification du modèle de référence à l'étape j) est effectuée en tenant compte de paramètres dépendant du moment du jour.

4. Procédé d'optimisation de la navigation automatique assistée par image d'un objet volant sans pilote selon l'une des revendications précédentes, **caractérisé en ce que** le dispositif de génération d'images de l'objet volant sans pilote fonctionne dans la plage de la lumière visible ou du rayonnement infrarouge.

5. Procédé d'optimisation de la navigation automatique assistée par image d'un objet volant sans pilote selon l'une des revendications 1 à 3, **caractérisé en ce que** le dispositif de génération d'images est un dispositif de génération d'images radar.

6. Procédé d'optimisation de la navigation automatique assistée par image d'un objet volant sans pilote selon l'une des revendications précédentes, **caractérisé en ce que** la comparaison des informations à propos des structures topologiques ou topographiques est effectuée par reconnaissance de différences de contraste dans l'image générée, des lignes et des bords de la structure topologique ou topographique étant reconnus en s'appuyant sur la différence de contraste.

7. Procédé d'optimisation de la navigation automatique assistée par image d'un objet volant sans pilote selon l'une des revendications précédentes, **caractérisé en ce que** la comparaison à l'étape i) est réalisée automatiquement par un ordinateur de traitement d'image de l'objet volant sans pilote.

8. Procédé d'optimisation de la navigation automatique assistée par image d'un objet volant sans pilote selon l'une des revendications précédentes, **caractérisé en ce que** la création du modèle de référence à l'étape g) est effectuée manuellement, semi-automatiquement ou automatiquement.
